(19) **Europäisches Patentamt**

**European Patent Office**

**Office européen des brevets**

(11) **EP 0 677 177 B1**

(12) **EUROPÄISCHE PATENTSCHRIFT**

(45) Veröffentlichungstag und Bekanntmachung des Hinweises auf die Patenterteilung:
**06.06.2001   Patentblatt 2001/23**

(51) Int Cl.7: **G02C 7/02**

(86) Internationale Anmeldenummer:
**PCT/DE94/01268**

(21) Anmeldenummer: **94930936.3**

(22) Anmeldetag: **28.10.1994**

(87) Internationale Veröffentlichungsnummer:
**WO 95/12832 (11.05.1995 Gazette 1995/20)**

(54) **BRILLENGLAS MIT PROGRESSIVER WIRKUNG**

PROGRESSIVE SPECTACLE LENS

VERRE DE LUNETTES A ACTION PROGRESSIVE

(84) Benannte Vertragsstaaten:
**AT BE CH ES FR GB IT LI LU NL SE**

(30) Priorität: **02.11.1993  DE 4337369**

(43) Veröffentlichungstag der Anmeldung:
**18.10.1995   Patentblatt 1995/42**

(60) Teilanmeldung:
**00124460.7 / 1 091 233**

(73) Patentinhaber: **Optische Werke G. Rodenstock**
**80469 München (DE)**

(72) Erfinder:
• **PFEIFFER, Herbert**
**D-81247 München (DE)**

• **ALTHEIMER, Helmut**
**D-80469 München (DE)**
• **HAIMERL, Walter**
**D-80337 München (DE)**

(74) Vertreter: **Münich, Wilhelm, Dr. et al**
**Dr. Münich & Kollegen**
**Anwaltskanzlei**
**Wilhelm-Mayr-Strasse 11**
**80689 München (DE)**

(56) Entgegenhaltungen:
**EP-A- 0 027 339      EP-A- 0 039 498**
**EP-A- 0 291 094      EP-A- 0 452 802**
**DE-A- 2 044 639      DE-B- 1 145 820**
**US-A- 4 613 217**

## Beschreibung

### Technisches Gebiet

Die Erfindung bezieht sich auf ein Brillenglas mit progressiver und astigmatischer Wirkung gemäß dem Oberbegriff des Patentanspruchs 1.

### Stand der Technik

Brillengläser mit progressiver Wirkung gemäß dem Oberbegriff des Patentanspruchs 1 sind beispielsweise aus der DE-PS 1 145 820, der GB-PS 775 007 oder dem Artikel "VERRES PROGRESSIFS POUR APHAQUES" aus L'Opticien Lunetier, 1971, No 222 bekannt.

Bei den aus der Patentliteratur bekannten und/oder auf Markt erhältlichen Brillengläsern mit progressiver Wirkung wird der auf einer Fläche mit variierender Flächenbrechkraft unweigerlich vorhandene Flächenastigmatismus eher als in Kauf zu nehmende Begleiterscheinung betrachtet, deren Betrag zumindest auf dem Hauptmeridian bzw. der Hauptlinie einen physiologisch störenden Wert nicht überschreiten sollte; hierzu wird auf die DE 30 16 935 C2 oder die EP 0 027 339 A2 verwiesen. Häufig ist sogar vorgeschlagen worden, den Hauptmeridian als Nabellinie auszubilden, d.h. als Linie, auf der der Flächenastigmatismus Null ist; hierzu wird exemplarisch auf die DE-AS 20 44 639 oder die DE-PS 28 14 936 verwiesen. Der Achslage des Astigmatismus wird in diesen Druckschriften keine Aufmerksamkeit gewidmet.

Offensichtlich wird hingenommen, daß sich die Achslage des Flächenastigmatismus nach Flächen-theoretischen und nicht nach physiologischen Gesichtspunkten einstellt:

Da sich der Gesamtastigmatismus durch die geometrische Addition des Flächenastigmatismus und des Astigmatismus schiefer Bündel ergibt, kann die Achslage des Gesamtastigmatismus längs des Hauptmeridians bzw. der Hauptlinie (die in etwa der Hauptblicklinie folgen kann) variieren, so daß sich eine das deutliche Sehen behindernde Variation der Achslage des Gesamtastigmatismus längs des Hauptmeridians bzw. längs der Hauptlinie ergibt.

Soll nun mit diesen bekannten progressiven Flächen ein Brillenglas mit einer torischen bzw. astigmatischen Wirkung realisiert werden, die zu Korrektionszwecken geeignet ist, so wird die zur Korrektion benötige astigmatische Wirkung ausschließlich durch die Ausbildung der zweiten Fläche erzielt:

In diesen Fällen wird dann die zweite Fläche als torische bzw. atorische Fläche (vgl. z.B. die DE 30 16 936 C2) ausgebildet.

Lediglich in der eingangs genannten DE-PS 1 145 820 ist eine Fläche beschrieben, deren Flächenastigmatismus einen konstanten Betrag über die gesamte Fläche hat, so daß unter Berücksichtigung der zweiten Fläche ein Brillenglas mit einem bestimmten Astigmatismus entsteht, der auch Korrektionszwecken dienen kann. Bei diesem bekannten Brillenglas ist die Achslage des Flächenastigmatismus der progressiven Flächen längs des ebenen Hauptmeridians konstant, nämlich 0° bzw. 90°.

Eine hiervon abweichende Achslage muß damit über die zweite Fläche realisiert werden, wobei sich bei Verwendung einer torischen zweiten Fläche dennoch unter Berücksichtigung des Astigmatismus schiefer Bündel ein physiologisch gegebenenfalls störende Variation des Gesamtastigmatismus ergibt.

### Beschreibung der Erfindung

Der Erfindung liegt der Grundgedanke zugrunde, ein Brillenglas mit progressiver Wirkung, das wenigstens eine Fläche mit sich derart ändernder Flächenbrechkraft aufweist, daß ausgehend von mindestens einem Bereich, in dem die Wirkung des Brillenglases wenigstens annähernd konstant ist, sich die Wirkung des Brillenglases längs einer Linie (i.f. als Hauptlinie bezeichnet) ändert, die in einer Ebene liegend oder gewunden sein kann, und auf der ein vorgebbarer Astigmatismus nicht identisch Null dpt vorhanden ist, derart weiterzubilden, daß sich keine störende Variationen des Betrags und der Achslage des Gesamtastigmatismus ergeben.

Ein erfindungsgemäßes Brillenglas ist im Anspruch 1 angegeben. Erfindungsgemäß weist der Flächenastigmatismus auf der Hauptlinie nicht nur einen bestimmten Betrag, sondern auch eine derartige längs der Hauptlinie in der Regel nicht konstante Achslage auf, daß der unter Berücksichtigung des Astigmatismus schiefer Bündel resultierende Gesamtastigmatismus des Bündels nach der augenseitigen Fläche längs der Hauptlinie nahezu konstant oder nach physiologischen Anforderungen gestaltet sowohl bezüglich Betrag als auch Achslage ist. Bei dem erfindungsgemäßen Glas ist es also im Gegensatz zum Stand der Technik möglich, nicht nur einen bestimmten Betrag des wenigstens über einen Teil der Hauptlinie von 0 dpt verschiedenen Flächenastigmatismus vorzugeben, sondern auch die Achslage des Flächenastigmatismus vorzugeben. Beispielsweise ändert sich nach der Listingschen Regel die Achslage eines astigmatischen Auges bei Blicksenkung. Dem kann durch eine entsprechende (korrigierende) Drehung der Achslage des Flächenastigmatismus Rechnung getragen werden.

Die durch die erfindungsgemäße Ausbildung mögliche Vorgabe von Betrag und Achslage des Flächenastigmatismus erfolgt unter an sich bekannten physiologischen Gesichtspunkten.

Weiterhin ist das erfindungsgemäße Brillenglas so gestaltet, daß lediglich eine Fläche zur Wirkungsänderung beiträgt, die andere Fläche ist eine rotationssymmetrische Fläche mit sphärischer Wirkung. Durch die erfindungsgemäße Ausbildung des Hauptmeridians bzw. der Hauptlinie wird zumindest der Hauptteil des zu Korrektionszwecken dienenden Astigmatismus durch den Flächenastigmatismus der Fläche mit sich ändernder Flächenbrechkraft aufgebracht wird.

Die Hauptlinie existiert nicht nur in der sogenannten Progressionszone, sondern ist auch in den Fernteil und/oder den Nahteil fortgesetzt.

Weiterhin ist die Hauptlinie in für progressive Brillengläser, bei denen die progressive Fläche keine astigmatische Wirkung hat, in bekannter Weise eine im Raum gekrümmte Kurve.

Zur Vorgabe nicht nur eines Wertes des Flächenastigmatismus, sondern auch der Achslage des Flächenastigmatismus längs der Hauptlinie ist die Hauptlinie und der sie umgebende Bereich nach Vorgabe der Projektion fl (y) der Hauptlinie auf die x,y-Ebene unter physiologischen Gesichtspunkten durch die Minimierung der folgenden Zielfunktion bestimmt :

$$F = \int_{Y_{min}}^{Y_{max}} [(A - A_v)^2 + (H - H_v)^2 + (\varepsilon - \varepsilon_v)^2]\ dy$$

wobei

| | |
|---|---|
| $A_v(y)$, $H_v(y)$ und $\varepsilon_v(y)$ | die vorgegebenen Flächeneigenschaften entlang der Hauptlinie und |
| $A(y)$ | der Flächenastigmatismus, |
| $H(y)$ | der Flächenbrechwert, und |
| $\varepsilon(y)$ | die Achslage des Flächenastigmatismus bezüglich der Horizontalebene sind. |

**Beschreibung von Ausführungsbeispielen**

Die Erfindung wird nachstehend anhand von Ausführungsbeispielen für die Achslagen 0, 30, 45, 60 und 90° näher beschrieben.

TABELLE 1

| Brechungsindex: 1.525 | | | Vorgegebene Achslage: .00 Grad | | | | | | |
|---|---|---|---|---|---|---|---|---|---|
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |
| 36.0 | .000 | 2.094 | .109 | 3.110 | 2.340 | 2.340 | 1.500 | 1.500 | .00 |
| 34.0 | .000 | 1.873 | .109 | 3.108 | 2.340 | 2.340 | 1.500 | 1.500 | .00 |
| 32.0 | .000 | 1.664 | .109 | 3.106 | 2.340 | 2.340 | 1.500 | 1.500 | .00 |
| 30.0 | .000 | 1.467 | .109 | 3.104 | 2.340 | 2.340 | 1.500 | 1.500 | .00 |
| 28.0 | .000 | 1.283 | .109 | 3.102 | 2.340 | 2.340 | 1.500 | 1.499 | .00 |
| 26.0 | .000 | 1.112 | .108 | 3.100 | 2.341 | 2.340 | 1.500 | 1.499 | .00 |
| 24.0 | -.001 | .952 | .108 | 3.099 | 2.341 | 2.340 | 1.500 | 1.499 | .00 |
| 22.0 | -.002 | .805 | .108 | 3.098 | 2.342 | 2.341 | 1.500 | 1.499 | .00 |
| 20.0 | -.003 | .669 | .107 | 3.098 | 2.343 | 2.342 | 1.500 | 1.499 | .00 |
| 18.0 | -.005 | .546 | .106 | 3.099 | 2.345 | 2.344 | 1.500 | 1.499 | .00 |
| 16.0 | -.010 | .436 | .105 | 3.101 | 2.348 | 2.347 | 1.500 | 1.499 | .00 |
| 14.0 | -.018 | .337 | .102 | 3.105 | 2.353 | 2.352 | 1.500 | 1.499 | .00 |
| 12.0 | -.032 | .251 | .097 | 3.113 | 2.362 | 2.361 | 1.500 | 1.499 | .00 |
| 10.0 | -.057 | .177 | .089 | 3.128 | 2.377 | 2.376 | 1.500 | 1.500 | .00 |
| 8.0 | -.103 | .115 | .073 | 3.152 | 2.400 | 2.400 | 1.500 | 1.501 | .00 |

TABELLE 1   (fortgesetzt)

| Brechungsindex: 1.525 | | | Vorgegebene Achslage: .00 Grad | | | | | | |
|---|---|---|---|---|---|---|---|---|---|
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |
| 6.0 | -.181 | .066 | .046 | 3.191 | 2.440 | 2.439 | 1.500 | 1.504 | .00 |
| 4.0 | -.311 | .030 | .000 | 3.255 | 2.503 | 2.502 | 1.500 | 1.507 | .00 |
| 2.0 | -.515 | .008 | -.073 | 3.356 | 2.604 | 2.602 | 1.500 | 1.508 | .00 |
| .0 | -.802 | .000 | -.181 | 3.510 | 2.759 | 2.758 | 1.500 | 1.503 | .00 |
| -2.0 | -1.156 | .008 | -.321 | 3.734 | 2.987 | 2.986 | 1.500 | 1.497 | .00 |
| -4.0 | -1.527 | .035 | -.478 | 4.041 | 3.293 | .291 | 1.500 | 1.499 | .00 |
| -6.0 | -1.852 | .082 | -.628 | 4.405 | 3.654 | 3.653 | 1.500 | 1.502 | .00 |
| -8.0 | -2.097 | ,150 | -.750 | 4.752 | 3.997 | 4.000 | 1.500 | 1.498 | .00 |
| -10.0 | -2.262 | .243 | -.839 | 4.988 | 4.228 | 4.234 | 1.500 | 1.495 | .00 |
| -12.0 | -2.363 | .361 | -.895 | 5.085 | 4.321 | 4.325 | 1.500 | 1.498 | .00 |
| -14.0 | -2.423 | .506 | -.930 | 5.105 | 4.339 | 4.339 | 1.500 | 1.499 | .00 |
| -16.0 | -2.457 | .6,78 | -.951 | 5.111 | 4.340 | 4.340 | 1.500 | 1.498 | .00 |
| -18.0 | -2.476 | .878 | -.963 | 5.117 | 4.340 | 4.339 | 1.500 | 1.498 | .00 |
| -20.0 | -2.487 | 1.105 | -.971 | 5.125 | 4.340 | 4.339 | 1.500 | 1.498 | .00 |
| -22.0 | -2.493 | 1.361 | -.977 | 5.135 | 4.340 | 4.339 | 1.500 | 1.499 | .00 |
| -24.0 | -2.496 | 1.644 | -.981 | 5.145 | 4.340 | 4.340 | 1.500 | 1.499 | .00 |
| -26.0 | -2.498 | 1.956 | -.985 | 5.157 | 4.340 | 4.340 | 1.500 | 1.500 | .00 |
| -28.0 | -2.499 | 2.296 | -.989 | 5.169 | 4.340 | 4.340 | 1.500 | 1.500 | .00 |
| -30.0 | -2.499 | 2.665 | -.993 | 5.182 | 4.340 | 4.340 | 1.500 | 1.500 | .00 |
| -32.0 | -2.500 | 3.062 | -.997 | 5.197 | 4.340 | 4.340 | 1.500 | 1.500 | .00 |
| -34.0 | -2.500 | 3.489 | -1.002 | 5.212 | 4.340 | 4.340 | 1.500 | 1.500 | .00 |
| -36.0 | -2.500 | 3.945 | -1.006 | 5.229 | 4.340 | 4.340 | 1.500 | 1.500 | .00 |
| | | | | | | | | | |
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |

TABELLE 2

| Brechungsindex: 1.525 | | | Vorgegebene Achslage: 30.00 Grad | | | | | | |
|---|---|---|---|---|---|---|---|---|---|
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |
| 36.0 | .000 | 2.623 | 2.402 | 2.742 | 2.340 | 2.340 | 1.500 | 1.500 | 30.00 |
| 34.0 | .000 | 2.347 | 2.254 | 2.739 | 2.340 | 2.340 | 1.500 | 1.500 | 30.00 |
| 32.0 | .000 | 2.087 | 2.107 | 2.737 | 2.340 | 2.340 | 1.500 | 1.500 | 30.00 |
| 30.0 | .000 | 1.841 | 1.960 | 2.734 | 2.340 | 2.340 | 1.500 | 1.500 | 30.00 |
| 28.0 | .000 | 1.611 | 1.814 | 2.732 | 2.340 | 2.340 | 1.500 | 1.500 | 30.00 |
| 26.0 | .000 | 1.397 | 1.669 | 2.730 | 2.341 | 2.341 | 1.500 | 1.500 | 30.00 |
| 24.0 | -.001 | 1.197 | 1.524 | 2.728 | 2.341 | 2.341 | 1.500 | 1.500 | 30.00 |
| 22.0 | -.002 | 1.013 | 1.379 | 2.727 | 2.342 | 2.342 | 1.500 | 1.500 | 30.00 |
| 20.0 | -.003 | .844 | 1.235 | 2.727 | 2.343 | 2.343 | 1.500 | 1.500 | 30.00 |
| 18.0 | -.005 | .690 | 1.091 | 2.727 | 2.345 | 2.345 | 1.500 | 1.500 | 30.00 |
| 16.0 | -.010 | .551 | .946 | 2.729 | 2.348 | 2.348 | 1.500 | 1.500 | 30.00 |
| 14.0 | -.018 | .428 | .801 | 2.733 | 2.353 | 2.353 | 1.500 | 1.500 | 29.99 |
| 12.0 | -.032 | .319 | .654 | 2.740 | 2.362 | 2.362 | 1.500 | 1.500 | 29.99 |
| 10.0 | -.057 | .226 | .504 | 2.754 | 2.377 | 2.376 | 1.500 | 1.501 | 29.98 |
| 8.0 | -.103 | .148 | .348 | 2.777 | 2.400 | 2.399 | 1.500 | 1.501 | 29.95 |

TABELLE 2   (fortgesetzt)

| Brechungsindex: 1.525 | | | Vorgegebene Achslage: 30.00 Grad | | | | | | |
|---|---|---|---|---|---|---|---|---|---|
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |
| 6.0 | -.181 | .085 | .182 | 2.816 | 2.440 | 2.437 | 1.500 | 1.502 | 29.92 |
| 4.0 | -.311 | .039 | .000 | 2.879 | 2.503 | 2.500 | 1.500 | 1.504 | 29.89 |
| 2.0 | -.515 | .010 | -.207 | 2.979 | 2.604 | 2.601 | 1.500 | 1.503 | 29.92 |
| .0 | -.802 | .000 | -.444 | 3.134 | 2.759 | 2.760 | 1.500 | 1.499 | 30.05 |
| -2.0 | -1.156 | .011 | -.712 | 3.361 | 2.987 | 2.990 | 1.500 | 1.495 | 30.13 |
| -4.0 | -1.527 | .044 | -.995 | 3.669 | 3.293 | 3.294 | 1.500 | 1.499 | 30.01 |
| -6.0 | -1.852 | .102 | -1.274 | 4.032 | 3.654 | 3.652 | 1.500 | 1.503 | 29.90 |
| -8.0 | -2.097 | .185 | -1.529 | 4.376 | 3.997 | 3.997 | 1.500 | 1.500 | 30.01 |
| -10.0 | -2.262 | .295 | -1.754 | 4.611 | 4.228 | 4.231 | 1.500 | 1.497 | 30.11 |
| -12.0 | -2.363 | .433 | -1.950 | 4.709 | 4.321 | 4.323 | 1.500 | 1.498 | 30.08 |
| -14.0 | -2.423 | .601 | -2.127 | 4.733 | 4.339 | 4.339 | 1.500 | 1.499 | 30.02 |
| -16.0 | -2.457 | .798 | -2.291 | 4.741 | 4.340 | 4.340 | 1.500 | 1.500 | 30.01 |
| -18.0 | -2.476 | 1.026 | -2.450 | 4.749 | 4.340 | 4.340 | 1.500 | 1.500 | 30.01 |
| -20.0 | -2.487 | 1.285 | -2.605 | 4.759 | 4.340 | 4.340 | 1.500 | 1.500 | 30.00 |
| -22.0 | -2.493 | 1.574 | -2.760 | 4.769 | 4.340 | 4.340 | 1.500 | 1.500 | 30.00 |
| -24.0 | -2.496 | 1.895 | -2.916 | 4.781 | 4.340 | 4.340 | 1.500 | 1.500 | 30.00 |
| -26.0 | -2.498 | 2.247 | -3.072 | 4.794 | 4.340 | 4.340 | 1.500 | 1.500 | 30.00 |
| -28.0 | -2.499 | 2.631 | -3.231 | 4.808 | 4.340 | 4.340 | 1.500 | 1.500 | 30.00 |
| -30.0 | -2.499 | 3.048 | -3.392 | 4.824 | 4.340 | 4.340 | 1.500 | 1.500 | 30.00 |
| -32.0 | -2.500 | 3.497 | -3.555 | 4.840 | 4.340 | 4.340 | 1.500 | 1.500 | 30.00 |
| -34.0 | -2.500 | 3.979 | -3.721 | 4.859 | 4.340 | 4.340 | 1.500 | 1.500 | 30.00 |
| -36.0 | -2.500 | 4.494 | -3.891 | 4.878 | 4.340 | 4.340 | 1.500 | 1.500 | 29.99 |
| | | | | | | | | | |
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |

TABELLE 3

| Brechungsindex: 1.525 | | | Vorgegebene Achslage: 45.00 Grad | | | | | | |
|---|---|---|---|---|---|---|---|---|---|
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |
| 36.0 | .000 | 3.188 | 1.868 | 2.374 | 2.340 | 2.340 | 1.000 | 1.000 | 45.00 |
| 34.0 | .000 | 2.854 | 1.753 | 2.371 | 2.340 | 2.340 | 1.000 | 1.000 | 45.00 |
| 32.0 | .000 | 2.539 | 1.639 | 2.367 | 2.340 | 2.340 | 1.000 | 1.000 | 45.00 |
| 30.0 | .000 | 2.242 | 1.525 | 2.364 | 2.340 | 2.340 | 1.000 | 1.000 | 45.00 |
| 28.0 | .000 | 1.964 | 1.412 | 2.362 | 2.341 | 2.341 | 1.000 | 1.000 | 45.00 |
| 26.0 | .000 | 1.704 | 1.300 | 2.360 | 2.341 | 2.341 | 1.000 | 1.000 | 45.00 |
| 24.0 | -.001 | 1.462 | 1.188 | 2.358 | 2.342 | 2.342 | 1.000 | 1.000 | 45.00 |
| 22.0 | -.002 | 1.239 | 1.076 | 2.357 | 2.343 | 2.343 | 1.000 | 1.000 | 45.00 |
| 20.0 | -.003 | 1.033 | .964 | 2.357 | 2.346 | 2.346 | 1.000 | 1.000 | 45.00 |
| 18.0 | -.005 | .846 | .853 | 2.359 | 2.350 | 2.349 | 1.000 | 1.000 | 45.01 |
| 16.0 | -.010 | .677 | .741 | 2.363 | 2.356 | 2.356 | 1.000 | 1.000 | 45.01 |
| 14.0 | -.018 | .526 | .629 | 2.372 | 2.366 | 2.366 | 1.000 | 1.000 | 45.02 |
| 12.0 | -.032 | .394 | .515 | 2.389 | 2.384 | 2.383 | 1.000 | 1.000 | 45.03 |
| 10.0 | -.057 | .279 | .399 | 2.416 | 2.413 | 2.412 | 1.000 | 1.000 | 45.06 |
| 8.0 | -.103 | .183 | .277 | 2.463 | 2.461 | 2.459 | 1.000 | 1.000 | 45.10 |

EP 0 677 177 B1

TABELLE 3  (fortgesetzt)

| Brechungsindex: 1.525 | | | Vorgegebene Achslage: 45.00 Grad | | | | | | |
|---|---|---|---|---|---|---|---|---|---|
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |
| 6.0 | -.181 | .106 | .146 | 2.541 | 2.539 | 2.536 | 1.000 | 1.000 | 45.17 |
| 4.0 | -.311 | .049 | .000 | 2.667 | 2.666 | 2.661 | 1.000 | 1.000 | 45.26 |
| 2.0 | -.515 | .013 | -.171 | 2.868 | 2.867 | 2.863 | 1.000 | 1.000 | 45.28 |
| .0 | -.802 | .000 | -.374 | 3.178 | 3.178 | 3.176 | 1.000 | 1.000 | 45.15 |
| -2.0 | -1.156 | .014 | -.615 | 3.633 | 3.633 | 3.633- | 1.000 | 1.000 | 45.00 |
| -4.0 | -1.527 | .058 | -.883 | 4.248 | 4.247 | 4.245 | 1.000 | .999 | 45.10 |
| -6.0 | -1.852 | .136 | -1.156 | 4.974 | 4.969 | 4.967 | 1.000 | .999 | 45.11 |
| -8.0 | -2.097 | .253 | -1.409 | 5.666 | 5.653 | 5.658 | 1.000 | 1.000 | 44.74 |
| -10.0 | -2.262 | .412 | -1.628 | 6.140 | 6.115 | 6.124 | 1.000 | 1.001 | 44.51 |
| -12.0 | -2.363 | .617 | -1.811 | 6.342 | 6.302 | 6.307 | 1.000 | 1.000 | 44.74 |
| -14.0 | -2.423 | .870 | -1.970 | 6.397 | 6.338 | 6.338 | 1.000 | 1.000 | 44.97 |
| -16.0 | -2.457 | 1.172 | -2.113 | 6.423 | 6.340 | 6.340 | 1.000 | 1.000 | 45.01 |
| -18.0 | -2.476 | 1.524 | -2.248 | 6.451 | 6.340 | 6.340 | 1.000 | 1.000 | 45.01 |
| -20.0 | -2.487 | 1.926 | -2.381 | 6.483 | 6.340 | 6.340 | 1.000 | 1.000 | 45.02 |
| -22.0 | -2.493 | 2.380 | -2.513 | 6.520 | 6.340 | 6.340 | 1.000 | 1.000 | 45.03 |
| -24.0 | -2.496 | 2.887 | -2.648 | 6.561 | 6.340 | 6.339 | 1.000 | 1.000 | 45.03 |
| -26.0 | -2.498 | 3.448 | -2.786 | 6.607 | 6.340 | 6.339 | 1.000 | 1.000 | 45.04 |
| -28.0 | -2.499 | 4.063 | -2.928 | 6.659 | 6.340 | 6.339 | 1.000 | 1.000 | 45.04 |
| -30.0 | -2.499 | 4.735 | -3.076 | 6.716 | 6.340 | 6.339 | 1.000 | 1.000 | 45.04 |
| -32.0 | -2.500 | 5.464 | -3.229 | 6.779 | 6.340 | 6.339 | 1.000 | 1.000 | 45.05 |
| -34.0 | -2.500 | 6.253 | -3.389 | 6.849 | 6.340 | 6.339 | 1.000 | 1.000 | 45.04 |
| -36.0 | -2.500 | 7.103 | -3.557 | 6.926 | 6.340 | 6.338 | 1.000 | 1.000 | 45.11 |
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |

TABELLE 4

| Brechungsindex: 1.525 | | | Vorgegebene Achslage: 60.00 Grad | | | | | | |
|---|---|---|---|---|---|---|---|---|---|
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |
| 36.0 | .000 | 3.566 | 2.391 | 2.002 | 2.340 | 2.340 | 1.500 | 1.500 | 60.00 |
| 34.0 | .000 | 3.186 | 2.241 | 1.998 | 2.340 | 2.340 | 1.500 | 1.500 | 60.00 |
| 32.0 | .000 | 2.827 | 2.092 | 1.995 | 2.340 | 2.340 | 1.500 | 1.500 | 60.00 |
| 30.0 | .000 | 2.491 | 1.943 | 1.991 | 2.340 | 2.340 | 1.500 | 1.500 | 60.00 |
| 28.0 | .000 | 2.176 | 1.796 | 1.988 | 2.340 | 2.340 | 1.500 | 1.500 | 60.00 |
| 26.0 | .000 | 1.882 | 1.649 | 1.985 | 2.341 | 2.341 | 1.500 | 1.500 | 60.00 |
| 24.0 | -.001 | 1.610 | 1.503 | 1.983 | 2.341 | 2.341 | 1.500 | 1.500 | 60.00 |
| 22.0 | -.002 | 1.359 | 1.357 | 1.981 | 2.342 | 2.342 | 1.500 | 1.500 | 60.00 |
| 20.0 | -.003 | 1.130 | 1.212 | 1.980 | 2.343 | 2.343 | 1.500 | 1.500 | 60.00 |
| 18.0 | -.005 | .921 | 1.067 | 1.979 | 2.345 | 2.345 | 1.500 | 1.500 | 60.00 |
| 16.0 | -.010 | .733 | .923 | 1.981 | 2.348 | 2.348 | 1.500 | 1.500 | 60.00 |
| 14.0 | -.018 | .567 | .778 | 1.984 | 2.353 | 2.353 | 1.500 | 1.500 | 59.99 |
| 12.0 | -.032 | .421 | .632 | 1.992 | 2.362 | 2.362 | 1.500 | 1.500 | 59.99 |
| 10.0 | -.057 | .296 | .484 | 2.005 | 2.377 | 2.376 | 1.500 | 1.499 | 59.98 |
| 8.0 | -.103 | .193 | .331 | 2.028 | 2.400 | 2.399 | 1.500 | 1.499 | 59.96 |

6

TABELLE 4   (fortgesetzt)

| Brechungsindex: 1.525 | | | Vorgegebene Achslage: 60.00 Grad | | | | | | |
|---|---|---|---|---|---|---|---|---|---|
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |
| 6.0 | -.181 | .111 | .172 | 2.066 | 2.440 | 2.437 | 1.500 | 1.498 | 59.92 |
| 4.0 | -.311 | .050 | .000 | 2.129 | 2.503 | 2.500 | 1.500 | 1.497 | 59.89 |
| 2.0 | -.515 | .013 | -.190 | 2.229 | 2.604 | 2.601 | 1.500 | 1.498 | 59.91 |
| .0 | -.802 | .000 | -.404 | 2.384 | 2.759 | 2.760 | 1.500 | 1.501 | 60.03 |
| -2.0 | -1.156 | .014 | -.642 | 2.611 | 2.987 | 2.989 | 1.500 | 1.503 | 60.11 |
| -4.0 | -1.527 | .055 | -.896 | 2.919 | 3.293 | 3.293 | 1.500 | 1.500 | 60.01 |
| -6.0 | -1.852 | .127 | -1.148 | 3.282 | 3.654 | 3.652 | 1.500 | 1.497 | 59.92 |
| -8.0 | -2.097 | .230 | -1.383 | 3.628 | 3.997 | 3.997 | 1.500 | 1.501 | 60.02 |
| -10.0 | -2.262 | .365 | -1.594 | 3.863 | 4.228 | 4.231 | 1.500 | 1.504 | 60.11 |
| -12.0 | -2.363 | .535 | -1.783 | 3.963 | 4.321 | 4.323 | 1.500 | 1.502 | 60.07 |
| -14.0 | -2.423 | .740 | -1.955 | 3.988 | 4.339 | 4.339 | 1.500 | 1.500 | 60.01 |
| -16.0 | -2.457 | .982 | -2.117 | 3.998 | 4.340 | 4.340 | 1.500 | 1.500 | 60.00 |
| -18.0 | -2.476 | 1.259 | -2.275 | 4.008 | 4.340 | 4.340 | 1.500 | 1.500 | 60.00 |
| -20.0 | -2.487 | 1.574 | -2.430 | 4.019 | 4.340 | 4.340 | 1.500 | 1.500 | 60.00 |
| -22.0 | -2.493 | 1.926 | -2.586 | 4.032 | 4.340 | 4.340 | 1.500 | 1.500 | 60.00 |
| -24.0 | -2.496 | 2.316 | -2.742 | 4.047 | 4.340 | 4.340 | 1.500 | 1.500 | 59.99 |
| -26.0 | -2.498 | 2.744 | -2.901 | 4.063 | 4.340 | 4.340 | 1.500 | 1.500 | 59.99 |
| -28.0 | -2.499 | 3.211 | -3.061 | 4.080 | 4.340 | 4.340 | 1.500 | 1.500 | 59.99 |
| -30.0 | -2.499 | 3.718 | -3.225 | 4.099 | 4.340 | 4.340 | 1.500 | 1.500 | 59.99 |
| -32.0 | -2.500 | 4.264 | -3.392 | 4.120 | 4.340 | 4.340 | 1.500 | 1.500 | 59.99 |
| -34.0 | -2.500 | 4.851 | -3.562 | 4.143 | 4.340 | 4.340 | 1.500 | 1.500 | 59.99 |
| -36.0 | -2.500 | 5.479 | -3.735 | 4.168 | 4.340 | 4.339 | 1.500 | 1.499 | 59.98 |
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |

TABELLE 5

| Brechungsindex: 1.525 | | | Vorgegebene Achslage: 90.00 Grad | | | | | | |
|---|---|---|---|---|---|---|---|---|---|
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse (Grad) |
| 36.0 | .000 | 3.977 | .058 | 1.628 | 2.340 | 2.340 | 1.500 | 1.500 | 90.00 |
| 34.0 | .000 | 3.548 | .058 | 1.624 | 2.340 | 2.340 | 1.500 | 1.500 | -90.00 |
| 32.0 | .000 | 3.145 | .058 | 1.620 | 2.340 | 2.340 | 1.500 | 1.500 | -90.00 |
| 30.0 | .000 | 2.766 | .057 | 1.617 | 2.340 | 2.340 | 1.500 | 1.500 | -90.00 |
| 28.0 | .000 | 2.412 | .057 | 1.613 | 2.340 | 2.340 | 1.500 | 1.500 | -90.00 |
| 26.0 | .000 | 2.082 | .057 | 1.611 | 2.341 | 2.341 | 1.500 | 1.500 | -90.00 |
| 24.0 | -.001 | 1.777 | .057 | 1.608 | 2.341 | 2.341 | 1.500 | 1.500 | -90.00 |
| 22.0 | -.002 | 1.497 | .057 | 1.606 | 2.342 | 2.342 | 1.500 | 1.500 | -90.00 |
| 20.0 | -.003 | 1.240 | .057 | 1.605 | 2.343 | 2.343 | 1.500 | 1.500 | -90.00 |
| 18.0 | -.005 | 1.008 | .056 | 1.604 | 2.345 | 2.345 | 1.500 | 1.500 | -90.00 |
| 16.0 | -.010 | .800 | .055 | 1.606 | 2.348 | 2.348 | 1.500 | 1.500 | -90.00 |
| 14.0 | -.018 | .615 | .054 | 1.609 | 2.353 | 2.353 | 1.500 | 1.500 | -90.00 |
| 12.0 | -.032 | .455 | .051 | 1.616 | 2.362 | 2.362 | 1.500 | 1.499 | -90.00 |
| 10.0 | -.057 | .318 | .047 | 1.630 | 2.377 | 2.376 | 1.500 | 1.499 | -90.00 |
| 8.0 | -.103 | .205 | .039 | 1.653 | 2.400 | 2.400 | 1.500 | 1.499 | -90.00 |

TABELLE 5   (fortgesetzt)

| Brechungsindex: 1.525 | | | Vorgegebene Achslage: 90.00 Grad | | | | | | |
|---|---|---|---|---|---|---|---|---|---|
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse (Grad) |
| 6.0 | -.181 | .117 | .024 | 1.691 | 2.440 | 2.438 | 1.500 | 1.498 | 90.00 |
| 4.0 | -.311 | .053 | .000 | 1.754 | 2.503 | 2.501 | 1.500 | 1.496 | 90.00 |
| 2.0 | -.515 | .013 | -.040 | 1.854 | 2.604 | 2.601 | 1.500 | 1.495 | 89.99 |
| .0 | -.802 | .000 | -.101 | 2.009 | 2.759 | 2.757 | 1.500 | 1.496 | 90.00 |
| -2.0 | -1.156 | .014 | -.182 | 2.237 | 2.987 | 2.986 | 1.500 | 1.498 | -89.99 |
| -4.0 | -1.527 | .057 | -.279 | 2.544 | 3.293 | 3.292 | 1.500 | 1.498 | -89.99 |
| -6.0 | -1.852 | .131 | -.375 | 2.907 | 3.654 | 3.654 | 1.500 | 1.499 | -89.99 |
| -8.0 | -2.097 | .239 | -.458 | 3.253 | 3.997 | 3.999 | 1.500 | 1.506 | 90.00 |
| -10.0 | -2.262 | .383 | -.519 | 3.489 | 4.228 | 4.232 | 1.500 | 1.509 | 89.99 |
| -12.0 | -2.363 | .565 | -.559 | 3.589 | 4.321 | 4.323 | 1.500 | 1.505 | 90.00 |
| -14.0 | -2.423 | .785 | -.583 | 3.614 | 4.339 | 4.339 | 1.500 | 1.501 | -90.00 |
| -16.0 | -2.457 | 1.045 | -.598 | 3.625 | 4.340 | 4.340 | 1.500 | 1.500 | -90.00 |
| -18.0 | -2.476 | 1.344 | -.607 | 3.635 | 4.340 | 4.340 | 1.500 | 1.500 | -90.00 |
| -20.0 | -2.487 | 1.684 | -.612 | 3.648 | 4.340 | 4.340 | 1.500 | 1.500 | -90.00 |
| -22.0 | -2.493 | 2.065 | -.616 | 3.661 | 4.340 | 4.340 | 1.500 | 1.500 | -90.00 |
| -24.0 | -2.496 | 2.486 | -.619 | 3.677 | 4.340 | 4.340 | 1.500 | 1.499 | -90.00 |
| -26.0 | -2.498 | 2.949 | -.622 | 3.694 | 4.340 | 4.340 | 1.500 | 1.499 | -90.00 |
| -28.0 | -2.499 | 3.455 | -.625 | 3.712 | 4.340 | 4.340 | 1.500 | 1.499 | -90.00 |
| -30.0 | -2.499 | 4.003 | -.627 | 3.733 | 4.340 | 4.340 | 1.500 | 1.499 | -90.00 |
| -32.0 | -2.500 | 4.595 | -.630 | 3.755 | 4.340 | 4.340 | 1.500 | 1.499 | -90.00 |
| -34.0 | -2.500 | 5.231 | -.633 | 3.780 | 4.340 | 4.340 | 1.500 | 1.499 | -90.00 |
| - 36.0 | -2.500 | 5.913 | -.636 | 3.806 | 4.340 | 4.339 | 1.500 | 1.499 | 90.00 |
| | | | | | | | | | |
| y [mm] | x0(y) [mm] | z0(y) [mm] | Delta [Grad] | Kh [Dpt] | D0v [Dpt] | D0 [Dpt] | Astv [Dpt] | Ast [Dpt] | Achse (Grad) |

In den Tabellen sind fünf Ausführungsbeispiele für erfindungsgemäße Flächen mit unterschiedlicher Achslage, nämlich 0° bzw. 180°, 30°, 45°, 60° und 90° angegeben. Dabei ist für jede Fläche jeweils nur ein Streifen entlang des gewundenen Hauptmeridians angegeben. Ist dieser Streifen erfindungsgemäß festgelegt, so kann die restliche Fläche in an sich bekannter Weise ausgehend von dem Streifen entlang des Hauptmeridians berechnet werden.

In den Tabellen bedeuten im einzelnen:

x, y und z sind die Koordinaten eines kartesischen Koordinatensystems, das so gewählt ist, daß die y-Achse in vertikaler Richtung (in Gebrauchsstellung des Brillenglases) und die x-Achse in horizontaler Richtung verlaufen. Der Nullpunkt des Koordinatensystems liegt im allgemeinen nicht auf der Fläche, sondern auf der Projektion der Hauptlinie auf die y, z-Ebene. Die z-Koordinate gibt damit den Abstand der Flächen von der x, y-Ebene an, d.h. den Abstand eines Flächenpunktes mit den Koordinaten x und y von einer Ebene.

In den fünf Tabellen sind in den jeweils ersten drei Spalten für y-Werte von +36 mm bis -36 mm die Koordinaten x0 und z0 von Punkten auf der Hauptlinie des Brillenglases angegeben. Die vierte Spalte gibt die Steigung Delta (in Grad) der Horizontalschnitte y=const. bezüglich der x-Achse als Funktion der Koordinate y an, während die fünfte Spalte die Krümmung Kh (in Dpt) der Horizontalschnitte im Schnittpunkt (x0, z0) mit der Hauptlinie angibt.

In den Spalten 6 folg. sind ferner folgende Werte angegeben:

| | |
|---|---|
| D0v | Vorgabewerte für den Flächenbrechwert auf der Hauptlinie in Dpt. |
| D0 | tatsächlicher Flächenbrechwert auf der Haupt-linie |
| Astv | Vorgabewert für den Flächenastigmatismus auf der Hauptlinie in Dpt. |
| Ast | tatsächlicher Flächenastigmatismus auf der Hauptlinie |
| Achse | tatsächliche Achslage in Grad. |

Die vier Funktionen x0(y), z0y), Delta(y) und Kh(y) bestimmen die Flächeneigenschaften eines infinitesimalen Streifens entlang der Hauptlinie eindeutig. Umgekehrt sind die Funktionen z0(y), Delta(y) und Kh(y) eindeutig durch die Vorgabe des Verlaufs des Flächenbrechwertes D0v(y), des Flächenastigmatismus Astv(y) und der Achslage bestimmt.

Wie den Tabellen zu entnehmen ist, können bei dem erfindungsgemäßen Brillenglas die Vorgabewerte längs der Hauptlinie mit großer Übereinstimmung eingehalten werden.

**Patentansprüche**

1.  Brillenglas mit progressiver und astigmatischer Wirkung, das eine Fläche aufweist, deren Flächenbrechkraft sich ausgehend von mindestens einem Bereich, in dem die Wirkung des Brillenglases zumindest annähernd konstant ist, sich wenigstens Längs einer Linie (i.f. als Hauptlinie bezeichnet) ändert, und bei dem die Fläche. die zur Änderung der Wirkung beiträgt, auch zu dem zu Korrektionszwecken dienenden Astigmatismus beiträgt,
    **gekennzeichnet** durch die Kombination folgender Merkmale

    -   die zweite Fläche ist eine rotationssymmetrische Fläche,
    -   die Hauptlinie ist eine gewundene Linie, die in etwa mit der Hauptblicklinie zusammenfällt, die das Auge bei einer Blicksenkung beschreibt,
    -   die Hauptlinie existiert auch in den Bereichen mit zumindest annähernd konstanter Wirkung,
    -   der Flächenastigmatismus hat auf der Hauptlinie nicht nur einen bestimmten Betrag, sondern auch eine derartige längs der Hauptlinie nicht konstante Achslage, daß der unter Berücksichtigung des Astigmatismus schiefer Bündel resultierende Gesamtastigmatismus des Strahlenbündels nach der augenseitigen Fläche längs der Hauptlinie nahezu konstant ist oder bezüglich der Achslage derart varriert, daß die Drehung der Achslage eines astigmatischen Auges bei Blicksenkung korrigiert wird,
    -   der Flächenbrechwert, der Wert des Flächenastigmatismus und die Achslage des Flächenastigmatismus längs der Hauptlinie und im umgebenden Bereich nach Projektion f1(y) der Hauptlinie auf die x,y-Ebene unter physiologischen Gesichtspunkten durch die Minimierung der folgenden Zielfunktion bestimmt sind:

$$F = \int_{Y_{min}}^{Y_{max}} [(A - A_v)^2 + (H - H_v)^2 + (\varepsilon - \varepsilon_v)^2] \, dy$$

    wobei

    $A_v(y)$, $H_v(y)$ und $\varepsilon_v(y)$      die vorgegebenen Flächeneigenschaften entlang der Hauptlinie und
    $A(y)$      der Flächenastigmatismus,
    $H(y)$      der Flächenbrechwert, und
    $\varepsilon(y)$      die Achslage des Flächenastigmatismus bezüglich der Horizontalebene sind.

**Claims**

1.  Progressive and astigmatic spectacle lens which has a surface, the surface refractive power of which, starting from at least one region in which the effect of the spectacle lens is at least nearly constant, changes at least along a line (i.f. described as the main line) and in which lens the surface, which contributes to the change in effect, also contributes to the astigmatism which serves for correction purposes,
    characterised by the combination of the following features,

    •   the second surface is a rotationally symmetrical surface,
    •   the main line is a curved line which coincides approximately with the main line of vision which the eye describes when looking down,
    •   the main line also exists in the regions with at least nearly constant effect,
    •   the surface astigmatism has not only a specific quantity on the main line but also has such a non-constant axial position along the main line that the total astigmatism of the bundle of rays, which total astigmatism results when taking into account astigmatism of oblique bundles, is almost constant along the main line according to the eye-side surface or, with respect to the axial position varies in such a way that the rotation of the axial position of an astigmatic eye when looking down is corrected,

- the surface power of the lens, the value of the surface astigmatism and the axial position of the surface astigmatism along the main line and in the surrounding region are determined according to projection fl(y) of the main line onto the x, y plane below physiological facial points by minimising the following objective function:

$$F = \int_{y_{min}}^{y_{max}} [(A - A_v)^2 + (H - H_v)^2 + (\varepsilon - \varepsilon_v)^2]\, dy$$

$A_v(y)$, $H_v(y)$ and $\varepsilon_v(y)$ being the prescribed surface properties along the main line and
A(y) the surface astigmatism,
H(y) the surface power of the lens, and
$\varepsilon(y)$ the axial position of the surface astigmatism with respect to the horizontal plane.

**Revendications**

1. Verre correcteur à effet progressif et astigmate, qui comprend une surface dont la puissance dioptrique de surface varie sur au moins une ligne (désignée dans le cas présent en tant que ligne principale) à partir d'au moins une zone dans laquelle la puissance du verre correcteur est au moins approximativement constante, et dans lequel verre la surface qui contribue à la variation de la puissance contribue également à l'astigmatisme utilisé à des fins de correction, caractérisé par la combinaison des caractéristiques suivantes :

   - la deuxième surface est une surface à symétrie de rotation,
   - la ligne principale est une ligne torse, qui coïncide pratiquement avec la ligne de vue principale que décrit l'oeil en baissant le regard,
   - la ligne principale existe aussi dans les zones présentant une puissance au moins approximativement constante,
   - l'astigmatisme de surface ne présente pas seulement une valeur déterminée sur la ligne principale, mais aussi une position axiale non constante le long de la ligne principale, de telle sorte que l'astigmatisme résultant total du faisceau de rayons, en tenant compte de l'astigmatisme des faisceaux inclinés, est pratiquement constant le long de la ligne principale en aval de la surface orientée vers l'oeil ou varie par rapport à la position axiale, de telle sorte que la rotation de la position axiale d'un oeil astigmate est corrigée en abaissant le regard,
   - l'indice de réfraction de surface, la valeur de l'astigmatisme de surface et la position axiale de l'astigmatisme de surface le long de la ligne principale et dans la zone environnante sont déterminés d'après la projection fl (y) de la ligne principale sur le plan x,y, en tenant compte des aspects physiologiques, par la minimisation de la fonction de performance suivante :

$$F = \int_{Y_{min}}^{Y_{max}} [(A - A_v)^2 + (H - H_v)^2 + (\varepsilon - \varepsilon_v)^2]\, dy$$

   dans laquelle

   $A_v(y)$, $H_v(y)$ et $\varepsilon_v(y)$ sont les propriétés de surface prédéterminées le long de la ligne principale, et
   A(y), l'astigmatisme de surface
   H(y), l'indice de réfraction de la surface, et
   $\varepsilon(y)$, la position axiale de l'astigmatisme de surface par rapport au plan horizontal.